# EUROPÄISCHE PATENTSCHRIFT

(11) **EP 2 875 934 B1**
(45) Veröffentlichungstag und Bekanntmachung des Hinweises auf die Patenterteilung: **05.04.2017**
(21) Anmeldenummer: 13450050.3
(22) Anmeldetag: 22.11.2013
(51) Int. Cl.: B29C 67/00

(54) **Vorrichtung zum Verarbeiten von photopolymerisierbarem Material zum schichtweisen Aufbau eines Formkörpers**
Device for processing of photopolymerisable material for building up a moulded body in layers
Dispositif de traitement de matériau photopolymérisable pour le montage en couche d'un corps moulé

(43) Veröffentlichungstag der Anmeldung: 27.05.2015
(73) Patentinhaber: Technische Universität Wien, 1040 Wien (AT); Ivoclar Vivadent AG, 9494 Schaan (LI)
(72) Erfinder: Gruber, Simon, 1090 Wien (AT); Stampfl, Jürgen, 1050 Wien (AT); Ebert, Jörg, 9470 Buchs (CH)
(74) Vertreter: Uexküll & Stolberg

(56) Entgegenhaltungen:
- EP-A1- 1 103 368
- EP-A1- 2 505 341
- EP-A2- 2 612 747
- WO-A1-2008/061764
- DE-A1- 4 402 108
- DE-A1-102005 022 308
- DE-B3-102006 056 422

## Beschreibung

Die Erfindung betrifft eine Vorrichtung zum Verarbeiten von photopolymerisierbarem Material zum schichtweisen Aufbau eines Formkörpers, umfassend
- eine Wanne mit einem zumindest bereichsweise lichtdurchlässigen Boden, in die photopolymerisierbares Material einfüllbar ist,
- eine Bauplattform, die in einstellbarer Höhe über dem Wannenboden gehalten ist,
- eine Belichtungseinheit, die zur ortsselektiven Belichtung einer zwischen der Unterseite der Bauplattform und dem Wannenboden ausgebildeten Materialschicht von unten durch den Wannenboden ansteuerbar ist,
- eine Steuereinheit, die dazu vorbereitet ist, in aufeinanderfolgenden Belichtungsschritten übereinanderliegende Schichten auf der Bauplattform jeweils mit vorgegebener Geometrie durch Steuerung der Belichtungseinheit zu polymerisieren und nach jedem Belichtungsschritt für eine Schicht die Relativposition der Bauplattform zum Wannenboden anzupassen, um so sukzessive den Formkörper in der gewünschten Form aufzubauen, und
- eine bewegbar geführte Rakel mit einer Antriebseinheit zum Hin- und Herbewegen der Rakel unter der Bauplattform hindurch.

Eine Vorrichtung der eingangs genannten Art ist aus der WO 2010/045950 A1 bekannt geworden.

Eine solche Vorrichtung erlaubt die lithographiebasierte generative Fertigung von Formstücken, insbesondere im Rahmen des sog. Rapid Prototyping. Bei den genannten stereolithographischen Verfahren wird jeweils eine neu aufgetragene Materialschicht durch ortsselektive Belichtung in der gewünschten Form polymerisiert, wodurch sukzessive durch schichtweise Formgebung der gewünschte Körper in seiner dreidimensionalen Form, die sich aus der Aufeinanderfolge der aufgebrachten Schichten ergibt, hergestellt wird.

Bei Vorrichtungen der gegenständlichen Art kommen meist Werkzeuge zum Einsatz, um das Material in der Wanne umzuwälzen oder neu zu verteilen, um eine homogene Materialschicht zu gewährleisten. Das Werkzeug ist als bewegbar geführte Rakel mit einer Antriebseinheit ausgebildet, um die Rakel unter der Bauplattform hindurch hin- und herzubewegen. Nach Anheben der Bauplattform nach einem Belichtungsschritt liegt im belichteten Bereich ein Materialdefizit vor. Dies ist dadurch bedingt, dass nach Aushärtung der eingestellten Schicht das Material aus dieser Schicht ausgehärtet und mit der Bauplattform und dem daran bereits gebildeten Teil des Formkörpers angehoben wird. Das damit fehlende photopolymerisierbare Material zwischen der Unterseite des bereits gebildeten Formkörperteils und dem Wannenboden muss aus der Füllung des photopolymerisierbaren Materials aus dem Umgebungsbereich des belichteten Bereichs aufgefüllt werden. Aufgrund der hohen Viskosität des Materials fließt dieses jedoch nicht von selbst wieder in den belichteten Bereich zwischen der Unterseite des Formkörperteils und dem Wannenboden zurück, so dass hier Materialsenken oder "Löcher" zurückbleiben können. Die Rakel dient somit dazu, die genannten Materialsenken zwischen den einzelnen Belichtungsvorgängen auszugleichen. Bei herkömmlichen Rakelausbildungen funktioniert die Materialverteilung jedoch vor allem bei hochviskosem Ausgangsmaterial nicht zuverlässig. Insbesondere funktioniert der Materialnachtransport nicht schnell genug und unterliegt Mengenschwankungen.

Die EP 2505341 A1 beschreibt ebenfalls eine Vorrichtung und ein Verfahren zum schichtweisen Aufbau eines Formkörpers aus hochviskosem photopolymerisierbarem Material. Die vorliegende Erfindung zielt daher darauf ab, lithographiebasierte generative Fertigungsverfahren dahingehend weiterzuentwickeln, dass ein gleichbleibender und schneller Nachtransport von unverbrauchtem Photopolymer gewährleistet wird.

Zur Lösung dieser Aufgabe dient die Vorrichtung mit den Merkmalen des Patentanspruchs 1. Vorteilhafte Ausführungsformen der Erfindung sind in den Unteransprüchen aufgeführt.

Die Erfindung sieht bei einer Vorrichtung der eingangs genannten Art im Wesentlichen vor, dass die Rakel zwei in Bewegungsrichtung beabstandete Rakelklingen aufweist, die in einstellbarem Abstand zum Wannenboden über diesen bewegt werden. Hierbei ist vorgesehen, dass der vertikale Abstand der Rakelklingen zum Wannenboden mittels einer einfachen Justiereinheit justierbar und auf diese Weise die Schichtdicke des aufgetragenen Materials einstellbar ist. Bevorzugt sind die zwei Rakelklingen in gleichem Abstand vom Wannenboden angeordnet. Die Rakel ist mit einer Antriebseinheit verbunden, welche diese zu einer Hin- und Herbewegung antreibt. Die Ausbildung mit zwei Rakelklingen ermöglicht eine Materialbeschichtung in beide Bewegungsrichtungen, womit die Prozesszeit erheblich verkürzt werden kann. Bei Systemen mit herkömmlicher Rakel muss die Rakel bzw. das Wischelement hingegen hin- und zurückgefahren werden, bevor eine neue Schicht aufgetragen werden kann.

Die Ausbildung mit zwei Rakelklingen bietet weiters den Vorteil, dass zwischen den zwei vorzugsweise parallelen Rakelklingen eine Kammer ausgebildet wird, die als Reservoir für unverbrauchtes Material dient. Bei der Hin- bzw. Herbewegung der Rakel während des Verteilungsschritts kann das unverbrauchte Material hierbei nach unten aus der Kammer herausfließen, um ggf. bestehende Löcher, Freiräume oder Vertiefungen in der Materialschicht aufzufüllen, wobei die in Bewegungsrichtung nacheilende Rakelklinge die Schichtdicke definiert. Löcher, Freiräume oder Vertiefungen im Badniveau ergeben sich insbesondere in dem Bereich, in dem die Bauplattform bzw. bereits ausgehärtete Schichten des Formkörpers nach dem Belichtungsvorgang aus dem Bad herausgehoben werden. Da sich der unverbrauchte Schlicker hauptsächlich in der Kammer befindet, wird relativ wenig Material zum Start des Bauprozesses und zum Aufrechterhalten des zuverlässigen Materialnachtransports benötigt.

Bei der Hin- und Herbewegung der Rakel schiebt die in Bewegungsrichtung vorauseilende Rakelklinge überschüssiges Material vor sich her, bis die Rakel am anderen Ende der Wanne angekommen ist. Dort staut sich das überschüssige Material, das sich in Form einer kleinen Welle vor der Klinge angesammelt hat, zwischen der Rakelklinge und der Wannenstirnwand auf und tendiert dazu, seitlich neben der Rakel oder über den oberen Rand der Rakel hinweg zurückzufließen. Um das sich aufstauende Material zu nutzen bzw. zu bearbeiten, ist vorgesehen, dass jede Wand der Kammer wenigstens eine die Wand in Bewegungsrichtung der Rakel durchsetzende Öffnung zur Ausbildung eines Überströmkanals aufweist. Dadurch kann das Material während oder am Ende des Verteilungsschritts durch die Überströmkanäle in die zwischen den zwei Rakelklingen ausgebildete Kammer gedrückt werden. Dadurch wird erreicht, dass das Material in der Kammer für den nächstfolgenden Verteilungsschritt wieder zur Verfügung steht. Außerdem wird das Material durch die Quetschung und das Strömen durch die Überströmkanäle ständig durchgemischt, sodass die Gefahr einer Entmischung insbesondere bei gefüllten Photopolymeren erheblich reduziert werden kann. In den zwei gegenüberliegenden Wänden der Kammer ist jeweils wenigstens eine Öffnung ausgebildet, sodass das Überströmen des Materials in beiden Bewegungsrichtungen der Rakel sichergestellt ist.

Um erforderlichenfalls für einen ausreichenden Nachschub an frischem Photopolymer Sorge tragen zu können, ist bevorzugt vorgesehen, dass die Kammer an ihrer Oberseite eine Nachfüllöffnung aufweist, welche in die Kammer mündet. Beim Nachfüllen kommt dabei bevorzugt eine Dosiereinheit zum Einsatz.

Weiters kann die unten offene Kammer an den Stirnseiten zwischen den zwei Rakelklingen jeweils eine Einströmöffnung aufweisen, sodass auch sich bodennah an der in Bewegungsrichtung vorauseilenden Rakelklinge aufstauendes Material in die Kammer einströmen kann.

Weiters kann wenigstens eine dritte Rakelklinge vorgesehen sein, die bevorzugt zwischen den zwei Rakelklingen angeordnet ist und gegenüber den zwei Rakelklingen in Richtung zum Wannenboden vorragt. Die dritte Rakelklinge wird dabei so positioniert bewegt, dass unverbrauchtes Material vom Wannenboden abgehoben wird. Auf diese Weise wird das unverbrauchte Material bei jeder Hin- bzw. Herbewegung der Rakel vom Wannenboden angehoben und in die zwischen den beiden Rakelklingen ausgebildete Kammer gefördert, wo eine Durchmischung und Homogenisierung erfolgen kann.

Um sicherzustellen, dass die dritte Rakelklinge bei einer Höhenverstellung der Rakel nicht gesondert nachgestellt werden muss, ist die dritte Rakelklinge bevorzugt gegen den Wannenboden federnd andrückbar angeordnet. Dies kann dadurch realisiert werden, dass die Klinge selbst aus elastischem Material gebildet ist oder dadurch, dass die Klinge gegen eine Rückstellkraft einwärts verlagerbar gehalten ist. Dadurch wird erreicht, dass die dritte Rakelklinge unabhängig von der jeweiligen Höhenposition der Rakel den Wannenboden kontaktiert. Sofern keine Erstarrung dünner aufgerakelter Schichten erfolgt, ist eine vergleichbare Rakelkonstruktion auch in einer Drehwanne vorteilhaft ausführbar.

Besonders bevorzugt ist die Rakel samt der zwei äußeren Rakelklingen einstückig ausgebildet. Die Rakel besteht dabei bevorzugt aus einem Polymerwerkstoff, z.B. Polytetrafluorethylen oder Polyoxymethylen. Dadurch kann die Rakel besonders verschleißfest und steif ausgebildet werden. Auf Grund der hohen Verschleißfestigkeit kommt es während des Betriebs zu keinem nennenswerten Abrieb, sodass das Photopolymer nicht verschmutzt wird. Die genannten Werkstoffe für die Rakel sind außerdem leicht zu reinigen.

Wie bereits erwähnt, ist die vorliegende Erfindung auch für hochviskose Ausgangsmaterialien geeignet. Eine besonders hohe Viskosität liegt beispielsweise bei Photopolymeren vor, die zur Plastifizierung und entsprechenden Zähigkeitssteigerung hochmolekulare Monomersysteme enthalten. Im Rahmen der Erfindung sind folgende Photopolymere/Monomersysteme bevorzugt einsetzbar:
- Mono- und multifunktionelle Acrylate
- Multifunktionale Methacrylate
- Verschiedene Polyglycole mit einer molaren Masse zwischen 200 und 1000 g/mol.

Mit einer hohen Viskosität des Ausgangsmaterials ist man auch bei der Verarbeitung von gefüllten photopolymerisierbaren Materialien (Schlicker) konfrontiert. Hierbei wird ein sinterfähiges Material (z.B. Keramik oder Metall) in Pulverform einem zähflüssigen, lichtempfindlichen Kunstharz beigemengt. Beim Aushärten der einzelnen Schichten wirkt das ausgehärtete Polymer als Binder. Nachdem der schichtartige Aufbau des Formkörpers beendet ist, wird das ausgehärtete Polymer thermisch entfernt und danach wird das übergebliebene Füllmaterial (z.B. Keramikpulver) zu einer festen Struktur zusammengesintert. Dieses Verfahren erlaubt es, alle Vorteile der generativen Fertigung auch für Materialien zu nützen, die grundsätzlich nicht für diese Verfahren geeignet wären. Der Füllgrad, d.h. der Anteil an Pulver im Schlicker, ist hierbei einer der wichtigsten Faktoren bezüglich Verarbeitbarkeit und Materialqualität. Dabei hat sich herausgestellt, dass insbesondere bei einem Füllgrad zwischen 42 und 65 vol% hochqualitative Bauteile erzeugt werden können. Hohe Füllgrade sind jedoch meistens mit einer hohen Viskosität des Ausgangsmaterials verbunden, was einige Probleme mit sich bringt, wie z.B. hohe Reaktionskräfte, Entmischung des Schlickers und erschwerter Materialnachtransport.

Um die Viskosität des Photopolymers zu senken, ist bevorzugt eine stationäre Heizeinrichtung zum Aufwärmen einer Schicht des in der Wanne befindlichen photopolymerisierbaren Materials auf eine Temperatur von mindestens 30°C vorgesehen. Dabei ist wesentlich, dass die Heizvorrichtung eine von der Belichtungseinheit verschiedene Einrichtung darstellt. Bevorzugt wird das Material auf mindestens 40°C aufgewärmt. Dem Merkmal der Heizeinrichtung liegt die Erkenntnis zugrunde, dass verschiedene strahlungsaushärtende Polymere bereits bei geringer Temperaturerhöhung eine deutliche Verringerung der Viskosität zeigen. Im Allgemeinen reicht eine Erwärmung auf 50°C aus, sodass sich der zusätzliche Energiebedarf in vertretbaren Grenzen hält. In speziellen Fällen kann eine Erwärmung auf bis zu 80°C erforderlich sein. Bei höheren Temperaturen kommt es zur ungewollten thermischen Polymerisation der Photopolymere. Auf Grund der Erwärmung kann auch photopolymerisierbares Material zum Einsatz gelangen, das eine erhöhte intermolekulare Wechselwirkung aufweist. Die erhöhte intermolekulare Wechselwirkung äußert sich durch eine erhöhte Viskosität bei Raumtemperatur (20°C). Die intermolekulare Wechselwirkung wird im vorliegenden Fall insbesondere dann als ausreichend betrachtet, wenn das Ausgangsmaterial bei Raumtemperatur eine Viskosität von mindestens 20 Pa·s aufweist.

Durch die erhöhte Temperatur in der Prozesszone wird auch die Reaktivität des Photopolymers erhöht. Im Vergleich zur Verarbeitung bei Raumtemperatur ist somit eine Reduktion von reaktiven Gruppen möglich, ohne die Reaktivität des Gesamtsystems zu verschlechtern.

Weiters wurde erkannt, dass eine zufriedenstellende Verringerung der Viskosität derart, dass die Materialverteilung und Schichtbildung in der Wanne ohne großen Kraft- und Zeitaufwand gelingt, insbesondere dann sichergestellt ist, wenn das viskose Material vorzugsweise großflächig, direkt an der Grenzfläche (Wannenboden) erwärmt wird, an der auch die Reaktionskräfte hauptsächlich verursacht werden.

Die Erwärmung des Materials erfolgt dabei bevorzugt nur in der Prozesszone der Anlage. Die Prozesszone umfasst den Bereich zwischen transparenter Wanne und dem bisher gebauten Formkörper. Typischerweise wird eine Photopolymerschicht mit einer Dicke zwischen 10µm und 1000µm beheizt. Der verbleibende Prozessraum der Anlage, in dem sich der Formkörper befindet, kann eine Temperatur aufweisen, die unterhalb der Temperatur der Prozesszone liegt.

Bevorzugt umfasst die Heizeinrichtung wenigstens ein am oder im Wannenboden angeordnetes Heizelement, wie z.B. eine Heizfolie. Der Wärmeeintrag erfolgt somit über den Wannenboden, sodass eine energieeffiziente Wärmeübertragung sichergestellt ist. Eine Heizfolie umfasst ein dünnes Trägerelement beispielsweise aus Kunststoff, in dem als Widerstandsheizung ausgebildete, meist mäanderartige Heizdrähte angeordnet sind. Dabei kann die Heizeinrichtung, wie z.B. die Heizfolie außerhalb des lichtdurchlässigen Bodenbereichs der Wanne angeordnet sein. Insbesondere können zwei Heizelemente, z.B. Heizfolien vorgesehen sein, wobei zu beiden Seiten des lichtdurchlässigen Bodenbereichs bzw. des Belichtungsbereichs jeweils ein Element angeordnet ist. In diesen seitlichen Bereichen befindet sich die Parkposition der Rakel während des Belichtungsvorgangs. Diese Anordnung erlaubt deshalb nicht nur eine störungsfreie Belichtung, sondern auch ein rasches Erwärmen des unverbrauchten Photopolymers, welches sich im Falle einer zwei Rakelklingen aufweisenden Rakel vorwiegend in der Kammer zwischen den beiden Rakelklingen befindet.

Alternativ oder zusätzlich kann vorgesehen sein, dass die Heizeinrichtung sich zumindest teilweise über den lichtdurchlässigen Bodenbereich der Wanne erstreckt und lichtdurchlässig ausgebildet ist. Dabei ist jedoch auf die optischen Eigenschaften der Heizfolie zu achten, insbesondere auf die Lichtdurchlässigkeit und darauf, dass keine gröberen Partikel eingeschlossen sind.

Eine Temperaturregelung gelingt in besonders einfacher Weise dadurch, dass ein Temperatursensor vorgesehen ist, der mit der Steuereinheit zur Regelung der Heizleistung der Heizeinrichtung derart zusammenwirkt, dass eine vorgegebene Temperatur des photopolymerisierbaren Materials erreicht und/oder gehalten werden kann. Der Temperatursensor ist bevorzugt als PT-Temperaturfühler ausgebildet und kann in die Heizfolie eingearbeitet sein.

Die Belichtungseinheit kann grundsätzlich beliebig ausgebildet sein, wobei die Erfindung nicht auf die Verwendung von sichtbarem Licht beschränkt ist. Vielmehr ist jede elektromagnetische Strahlung geeignet, die in der Lage ist, das jeweils eingesetzte photopolymerisierbare Material zu härten. Beispielsweise kann UV-Licht zur Anwendung gelangen. Alternativ kann Licht mit einer Wellenlänge im sichtbaren Bereich verwendet werden.

Die Belichtungseinheit ist bevorzugt unter dem Wannenboden angeordnet. Sie wird von der Steuereinheit gesteuert, um ein vorgegebenes Belichtungsfeld an der Unterseite des Wannenbodens selektiv mit einem Muster in gewünschter Geometrie zu belichten. Vorzugsweise weist die Belichtungseinheit eine Lichtquelle mit einer oder mehreren Leuchtdioden auf, wobei im Belichtungsfeld vorzugsweise eine Lichtleistung von etwa 15 bis 200 mW/cm² erreicht wird. Die Wellenlänge des von der Belichtungseinheit abgestrahlten Lichts liegt vorzugsweise im Bereich von 350 bis 500 nm. Das Licht der Lichtquelle kann über einen Lichtmodulator ortsselektiv in seiner Intensität moduliert und in dem resultierenden Intensitätsmuster mit gewünschter Geometrie auf das Belichtungsfeld an der Unterseite des Wannenbodens abgebildet werden. Als Lichtmodulatoren können verschiedene Arten von sogenannten DLP-Chips (digital light processing Chips) dienen, wie zum Beispiel Mikrospiegelfelder, LCD-Felder und dergleichen. Alternativ kann als Lichtquelle ein Laser verwendet werden, dessen Lichtstrahl über einen beweglichen Spiegel, der von der Steuereinheit gesteuert werden kann, das Belichtungsfeld sukzessive abtastet.

Bevorzugt ist die Bauplattform in einem Hubmechanismus durch die Steuereinheit höhenverstellbar oberhalb des Wannenbodens gehalten. Vorzugsweise ist die Steuereinheit dazu vorbereitet, die Dicke der Schicht, nämlich den Abstand zwischen der Bauplattform oder der letzten erzeugten Schicht und dem Wannenboden, über den Hubmechanismus einzustellen.

Die Wanne ist bevorzugt zweiteilig ausgebildet und umfasst einen vorzugsweise mehrschichtigen, transparenten Wannenboden und einen Materialwannenrahmen. Die unterste Schicht des Wannenbodens besteht hierbei z.B. aus einer massiven Glasplatte, die als tragendes Element dient. Darüber liegen eine Silikonschicht und eine Antihaftfolie, die für eine Reduktion der Reaktionskräfte während des Druckprozesses sorgen. Der Rahmen besteht bevorzugt aus einem chemisch beständigen Kunststoff.

Mit Vorteil dient der Wannenrahmen neben der Funktion als Materialbehälter gleichzeitig als Spannvorrichtung für das Wannensystem. So ist ein einfacher und schneller Wannenwechsel möglich. Die zweiteilige Ausführung des Wannensystems erlaubt ein unkompliziertes und rasches Reinigen nach dem Druckvorgang.

Weiters kann ein einzelner Wannenkörper durch Trennwände in mehrere voneinander getrennte Wannensegmente unterteilt sein und so eine Mehrzahl von Wannen im Sinne der Erfindung bilden.

Um zu vermeiden, dass photopolymerisierbares Material im Bereich der Rakel, insbesondere das sich in der Reservoirkammer zwischen den beiden Rakelklingen befindliche Material, auskühlt, sieht eine bevorzugte Weiterbildung vor, dass die Rakel beheizbar ist. Insbesondere kann die Rakel mit wenigstens einem Heizelement, beispielsweise einem elektrischen Widerstandsheizelement ausgestattet sein.

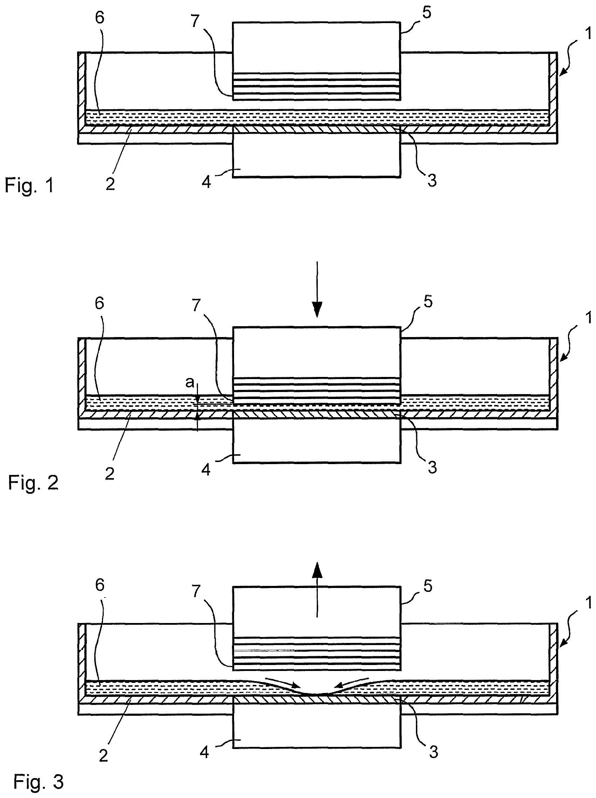

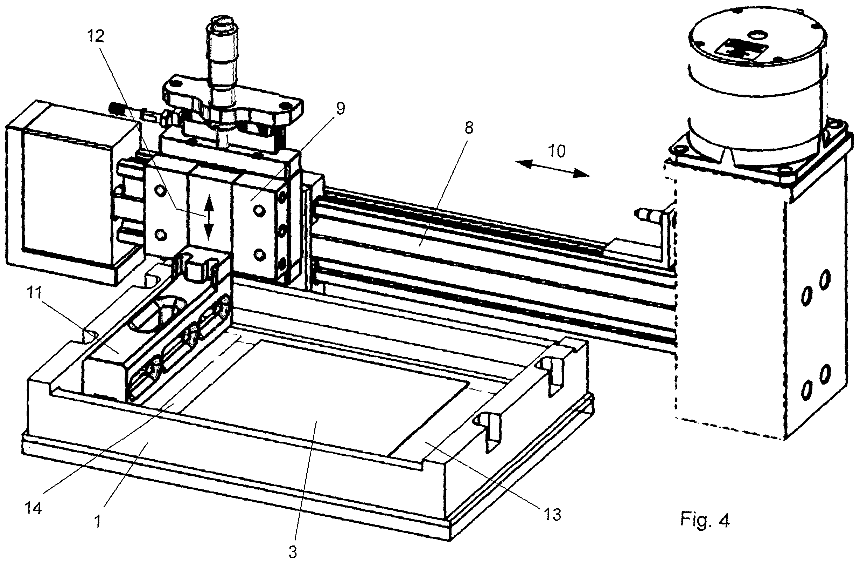

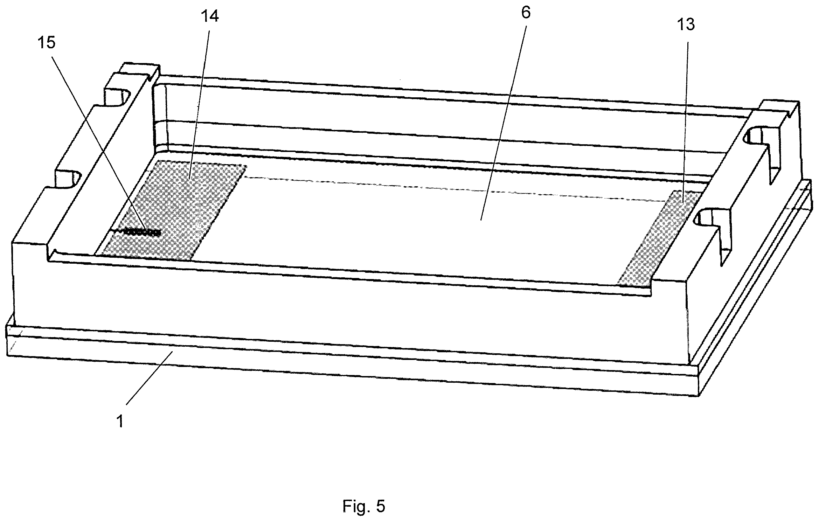

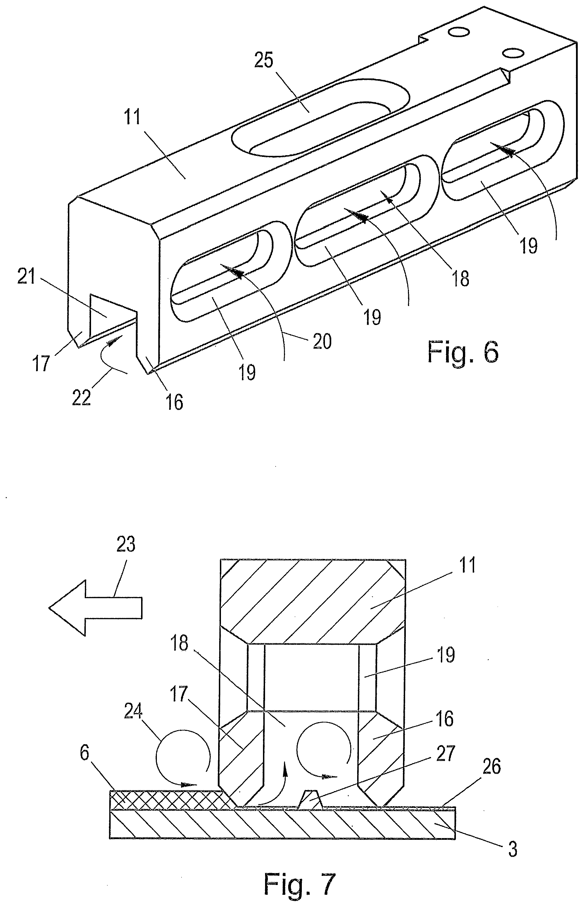

Die Erfindung wird nachfolgend anhand von in der Zeichnung schematisch dargestellten Ausführungsbeispielen näher erläutert. In dieser zeigen Fig. 1 bis 3 schematische seitliche Schnittansichten einer erfindungsgemäßen Vorrichtung in aufeinanderfolgenden Phasen des Verfahrensablaufs, Fig. 4 eine perspektivische Ansicht der Vorrichtung ohne Bauplattform, Fig. 5 eine perspektivische Ansicht der Wanne gemäß Fig. 4, Fig. 6 eine perspektivische Ansicht der erfindungsgemäß zum Einsatz gelangenden Rakel und Fig. 7 eine schematische Schnittansicht der Rakel gemäß Fig. 6.

Die Funktionsweise einer erfindungsgemäßen Vorrichtung wird zunächst unter Bezugnahme auf die Fig. 1 bis 3 beschrieben, wobei diesbezüglich auf die in der WO 2010/045950 A1 beschriebene Vorrichtung Bezug genommen wird. Die Vorrichtung weist eine Wanne 1 auf, deren Wannenboden 2 zumindest in einem Teilbereich 3 durchsichtig oder durchscheinend ist. Dieser Teilbereich 3 des Wannenbodens 2 überdeckt zumindest die Ausdehnung einer Belichtungseinheit 4, die unter dem Wannenboden 2 angeordnet ist. Die Belichtungseinheit 4 weist eine Lichtquelle und einen Lichtmodulator auf, mit dem die Intensität gesteuert von einer Steuereinheit ortsselektiv eingestellt wird, um ein Belichtungsfeld mit der für die momentan zu bildende Schicht gewünschten Geometrie an dem Wannenboden 2 zu erzeugen. Alternativ kann in der Belichtungseinheit 4 auch ein Laser verwendet werden, dessen Lichtstrahl über einen beweglichen Spiegel, der von einer Steuereinheit gesteuert wird, das Belichtungsfeld mit dem gewünschten Intensitätsmuster sukzessive abtastet.

Der Belichtungseinheit 4 gegenüber ist über der Wanne 1 eine Bauplattform 5 vorgesehen, die von einem nicht dargestellten Hubmechanismus getragen wird, so dass sie in höhenverstellbarer Weise über dem Wannenboden 2 im Bereich über der Belichtungseinheit 4 gehalten wird. Die Bauplattform 5 kann ebenfalls durchsichtig oder durchscheinend sein, so dass durch eine weitere Belichtungseinheit oberhalb der Bauplattform 5 Licht eingestrahlt werden kann, um zumindest bei der Bildung der ersten Schicht an der Unterseite der Bauplattform 5 diese auch von oben zu belichten, damit die erste an der Bauplattform 5 ausgehärtete Schicht auch mit hoher Verlässlichkeit an dieser anhaftet.

In der Wanne 1 befindet sich eine Füllung aus hochviskosem photopolymerisierbarem Material 6. Der Materialspiegel der Füllung liegt dabei deutlich höher als die Dicke der Schichten, die zur ortsselektiven Belichtung definiert werden sollen. Zur Definition einer Schicht aus photopolymerisierbarem Material wird in folgender Weise vorgegangen. Die Bauplattform 5 wird durch den Hubmechanismus in gesteuerter Weise abgesenkt, so dass (vor dem ersten Belichtungsschritt) ihre Unterseite in die Füllung des photopolymerisierbaren Materials 6 eintaucht und sich dem Wannenboden 2 soweit nähert, dass zwischen der Unterseite der Bauplattform 5 und dem Wannenboden 2 genau die gewünschte Schichtdicke a (siehe Fig. 2) verbleibt. Während dieses Eintauchvorgangs wird photopolymerisierbares Material aus dem Zwischenraum zwischen der Unterseite der Bauplattform 5 und dem Wannenboden 2 verdrängt. Nach Einstellung der Schichtdicke a erfolgt die für diese Schicht gewünschte ortsselektive Belichtung der Schicht, um sie in der gewünschten Form auszuhärten. Insbesondere bei der Bildung der ersten Schicht kann auch eine Belichtung von oben durch die durchsichtige oder durchscheinende Bauplattform 5 erfolgen, damit insbesondere im Kontaktbereich zwischen der Unterseite der Bauplattform 5 und dem photopolymerisierbaren Material 6 eine sichere und vollständige Aushärtung erfolgt und damit eine gute Anhaftung der ersten Schicht an der Bauplattform 5 gewährleistet ist. Nach der Bildung der Schicht wird die Bauplattform 5 mittels des Hubmechanismus wieder angehoben.

Diese Schritte werden nachfolgend mehrfach wiederholt, wobei dann jeweils der Abstand der Unterseite der zuletzt gebildeten Schicht 7 zum Wannenboden 2 auf die gewünschte Schichtdicke a eingestellt wird und daraufhin die nächste Schicht in der gewünschten Weise ortsselektiv ausgehärtet wird.

Nach Anheben der Bauplattform 5 nach einem Belichtungsschritt liegt im belichteten Bereich ein Materialdefizit vor, wie in Fig. 3 angedeutet. Dies ist dadurch bedingt, dass nach Aushärtung der eingestellten Schicht mit der Dicke a das Material aus dieser Schicht ausgehärtet und mit der Bauplattform 5 und dem daran bereits gebildeten Teil des Formkörpers angehoben wird. Das damit fehlende photopolymerisierbare Material zwischen der Unterseite des bereits gebildeten Formkörperteils und dem Wannenboden 2 muss aus der Füllung des photopolymerisierbaren Materials 6 aus dem Umgebungsbereich des belichteten Bereichs aufgefüllt werden. Aufgrund der hohen Viskosität des Materials fließt dieses jedoch nicht von selbst wieder in den belichteten Bereich zwischen der Unterseite des Formkörperteils und dem Wannenboden zurück, so dass hier Materialsenken oder "Löcher" zurückbleiben können.

In der Darstellung gemäß Fig. 4 sind die in den Fig. 1 bis 3 der Übersichtlichkeit halber weggelassenen Bauelemente der Vorrichtung dargestellt. Die Wanne ist wieder mit 1 bezeichnet, deren Boden einen durchsichtigen Bereich 3 aufweist. Der Wanne 1 ist eine Führungsschiene 8 zugeordnet, auf der ein Schlitten 9 in Richtung des Doppelpfeils 10 verschieblich geführt ist. Ein Antrieb sorgt für die Hin- und Herbewegung des Schlittens 9, der eine Halterung für eine Rakel 11 aufweist. Die Halterung weist eine Führung und eine Verstelleinrichtung auf, um die Rakel 11 in Richtung des Doppelpfeils 12 in Höhenrichtung zu verstellen. Damit kann der Abstand der Unterkante der Rakel 11 vom Boden der Wanne 1 eingestellt werden. Die Rakel 11 kommt zum Einsatz, nachdem die Bauplattform wie in Fig. 3 dargestellt angehoben wurde, und dient dazu das Material 6 gleichmäßig unter Einstellung einer vorgegebenen Schichtdicke zu verteilen, um das im Bereich der Bauplattform 5 auftretende Materialdefizit auszugleichen und um ggf. neues Material nachzuliefern. Die sich beim Materialverteilungsvorgang ergebende Schichtdicke des Materials 6 ist durch den Abstand der Unterkante der Rakel 11 vom Boden 2 der Wanne 1 definiert.

Weiters sind in Fig. 4 beiderseits des durchsichtigen Bereichs 6 des Wannenbodens 2 angeordnete Heizfolien 13 und 14 ersichtlich, die dazu dienen, das Material 6 aufzuwärmen, um dessen Viskosität herabzusetzen.

In Fig. 5 sind die Heizfolien 13 und 14 deutlicher ersichtlich. Weiters ist ein Temperatursensor 15 dargestellt, der dazu dient, die Temperatur der Heizfolie 14 bzw. des Materials 6 zu messen.

In Fig. 6 ist die Ausbildung der Rakel 11 im Detail dargestellt. Die Rakel weist zwei parallele Rakelklingen 16 und 17 auf, zwischen denen im Inneren der Rakel 11 eine Kammer 18 ausgebildet ist. An der Längsseite der Rakel 11 sind drei Überströmkanäle 19 vorgesehen, über welche Material 6 entsprechend den Pfeilen 20 in die Kammer 18 einströmen kann. Entsprechende Überströmkanäle sind auch an der rückwärtigen Längsseite der Rakel 11 vorgesehen, die in Fig. 6 jedoch nicht sichtbar sind. Weiters ist die Kammer 18 an den Stirnseiten der Rakel 11 offen (Öffnungen 21), sodass auch hier ein Einströmen von Material 6 entsprechend dem Pfeil 22 ermöglicht wird. Über die obere Öffnung 25 kann erforderlichenfalls neues Material in die Kammer 18 eingebracht werden.

Die Funktionsweise der Rakel 11 wird nun anhand der Schnittansicht gemäß Fig. 7 erläutert. Bei einer Bewegung der Rakel 11 in Richtung des Pfeils 23 definiert die Unterkante der Rakelklinge 16 bzw. 17 eine Materialschicht 26 mit einer vorgegebenen Schichtdicke. Die Rakelklingen 16 und 17 sind dabei in gleichem Abstand vom Boden 3 angeordnet. Überschüssiges Material 6 wird vor der in Bewegungsrichtung vorauseilenden Rakelklinge 17 hergeschoben, wobei sich eine Strömungsbewegung entsprechend dem Pfeil 24 ergibt. Wenn die Rakel 11 am Ende ihrer Bewegung gegen die Innenwand der Wanne 1 bewegt wird, wird das vor der Rakelklinge 17 aufgestaute Material über die Überströmöffnungen 19 in die Kammer 18 gedrückt. Seitlich kann das Material über die seitlichen Öffnungen 21 in die Kammer 18 gelangen.

Zwischen den Rakelklingen 16 und 17 ist eine in Fig. 7 schematisch angedeutete dritte Rakelklinge 27 angeordnet, die tiefer angeordnet ist als die Rakelklingen 16 und 17. Die dritte Rakelklinge 27 berührt den Wannenboden 3 und hebt unverbrauchtes Material vom Wannenboden ab. Auf diese Weise wird das unverbrauchte Material bei jeder Hin- bzw. Herbewegung der Rakel 11 in die Kammer 18 gefördert, wo eine Durchmischung und Homogenisierung erfolgen kann. Dadurch, dass die Rakel 11 mit zwei Rakelklingen 16 und 17 und mit einer Kammer 18 und im Wesentlichen symmetrisch ausgebildet ist, genügt eine Hin- oder eine Herbewegung, um das Material für den nächsten Belichtungsschritt gleichmäßig zu verteilen. Dies ist ein wesentlicher Vorteil zu herkömmlichen Ausbildungen, bei denen zu diesem Zweck sowohl eine Hin- als auch ein Herbewegung erforderlich sind.

## Patentansprüche

1. Vorrichtung zum Verarbeiten von hochviskosen photopolymerisierbarem Material zum schichtweisen Aufbau eines Formkörpers, umfassend
- eine Wanne mit einem zumindest bereichsweise lichtdurchlässigen Boden, in die photopolymerisierbares Material einfüllbar ist,
- eine Bauplattform, die in einstellbarer Höhe über dem Wannenboden gehalten ist,
- eine Belichtungseinheit, die zur ortsselektiven Belichtung einer zwischen der Unterseite der Bauplattform und dem Wannenboden ausgebildeten Materialschicht von unten durch den Wannenboden ansteuerbar ist,
- eine Steuereinheit, die dazu vorbereitet ist, in aufeinanderfolgenden Belichtungsschritten übereinanderliegende Schichten auf der Bauplattform jeweils mit vorgegebener Geometrie durch Steuerung der Belichtungseinheit zu polymerisieren und nach jedem Belichtungsschritt für eine Schicht die Relativposition der Bauplattform zum Wannenboden anzupassen, um so sukzessive den Formkörper in der gewünschten Form aufzubauen, und
- eine bewegbar geführte Rakel mit einer Antriebseinheit zum Hin- und Herbewegen der Rakel unter der Bauplattform hindurch,
**dadurch gekennzeichnet, dass**
- die Rakel zwei in Bewegungsrichtung beabstandete Rakelklingen aufweist, die in konstantem Abstand zum Wannenboden über diesen bewegbar sind, wobei der vertikale Abstand der Rakelklingen zum Wannenboden mittels einer Justiereinheit justierbar ist,
- die Wanne Wannenstirnwände aufweist, so dass die in Bewegungsrichtung vorauseilende Rakelklinge sich jeweils auf eine der Wannenstirnwände zu bewegt,
- dass zwischen den zwei Rakelklingen eine unten offene Kammer ausgebildet ist, deren Wände jeweils wenigstens eine die Wand in Bewegungsrichtung der Rakel durchsetzende Öffnung zur Ausbildung eines Überströmkanals aufweisen, so dass sich zwischen der vorauseilenden Rakelklinge und der dieser zugewandten Wannenstirnwand aufstauendes überschüssiges Material durch den wenigstens einen Überströmkanal in die Kammer gedrückt wird.

2. Vorrichtung nach Anspruch 1, **dadurch gekennzeichnet,**
**dass** die unten offene Kammer an den Stirnseiten zwischen den zwei Rakelklingen jeweils eine Einströmöffnung aufweist.

3. Vorrichtung nach einem der Ansprüche 1 oder 2, **dadurch gekennzeichnet, dass** die Kammer an ihrer Oberseite eine Nachfüllöffnung aufweist.

4. Vorrichtung nach einem der Ansprüche 1 bis 3, **dadurch gekennzeichnet, dass** wenigstens eine dritte Rakelklinge vorgesehen wird, die bevorzugt zwischen den zwei Rakelklingen angeordnet ist und gegenüber den zwei Rakelklingen in Richtung zum Wannenboden vorragt.

5. Vorrichtung nach Anspruch 4, **dadurch gekennzeichnet, dass** die dritte Rakelklinge den Wannenboden berührt und bevorzugt gegen den Wannenboden federnd andrückbar gehalten ist.

6. Vorrichtung nach einem der Ansprüche 1 bis 5, **dadurch gekennzeichnet, dass** die Rakel samt der beiden äußeren Rakelklingen einstückig ausgebildet ist und bevorzugt aus einem Polymerwerkstoff, z.B. Polytetrafluorethylen oder Polyoxymethylen, besteht.

7. Vorrichtung nach einem der Ansprüche 1 bis 6, **dadurch gekennzeichnet, dass** eine stationäre Heizeinrichtung vorgesehen ist zum Aufwärmen einer Schicht des in der Wanne befindlichen photopolymerisierbaren Materials auf eine Temperatur von mindestens 30°C.

8. Vorrichtung nach Anspruch 7, **dadurch gekennzeichnet, dass** die Heizeinrichtung wenigstens ein am oder im Wannenboden angeordnetes Heizelement, wie z.B. eine Heizfolie umfasst.

9. Vorrichtung nach Anspruch 7 oder 8, **dadurch gekennzeichnet, dass** die Heizeinrichtung außerhalb des lichtdurchlässigen Bodenbereichs der Wanne angeordnet ist.

10. Vorrichtung nach Anspruch 7, 8 oder 9, **dadurch gekennzeichnet, dass** die Heizeinrichtung sich zumindest teilweise über den lichtdurchlässigen Bodenbereich der Wanne erstreckt und lichtdurchlässig ausgebildet ist.

11. Vorrichtung nach einem der Ansprüche 7 bis 10, **dadurch gekennzeichnet, dass** ein Temperatursensor vorgesehen ist, der mit der Steuereinheit zur Regelung der Heizleistung der Heizeinrichtung derart zusammenwirkt, dass eine vorgegebene Temperatur des photopolymerisierbaren Material erreicht und/oder gehalten werden kann.

12. Vorrichtung nach einem der Ansprüche 1 bis 11, **dadurch gekennzeichnet, dass** die Rakel beheizbar ist, insbesondere mit wenigstens einem Heizelement, beispielsweise einem elektrischen Widerstandsheizelement ausgestattet ist.

## Claims

1. Device for processing highly viscous photopolymerizable material for layer-by-layer generation of a shaped body comprising
a vat having a bottom which is at least in a subregion thereof transparent, into which vat photopolymerizable material can be filled,
a build platform which is held at an adjustable height over the vat bottom,
an exposure unit controllable for exposing in a locally selective manner a material layer formed between the lower side of the build platform and the vat bottom, said exposing being from below through the vat bottom
a control unit which is arranged to polymerize in subsequent exposure steps layers on top of each other on the build platform, in each case with a given geometry by controlling the exposure unit, and after each exposure step for a layer to adapt the relative position of the build platform with respect to the vat bottom, in order to hereby successively generate the shaped body in the desired shape, and
a moveably guided doctor blade arrangement comprising a drive unit for back and forth movement of the doctor blade arrangement through beneath the build platform,
**characterized in that**
the doctor blade arrangement includes two doctor blades which are spaced apart in movement direction and which are moveable along the vat bottom at a constant distance distance to the vat bottom, wherein the vertical distance of the doctor blades to the vat bottom is adjustable by an adjustment device,
the vat includes vat end walls so that the doctor blade leading in movement direction is moving towards one of the vat end walls,
between the two doctor blades a chamber open at the lower side is formed, the walls of the chamber including at least one opening extending in movement direction of the doctor blade arrangement through the respective wall for forming an overflow channel such that material which is accumulating between the leading doctor blade and the vat end wall facing the leading doctor blade is pressed through the at least one overflow channel into the chamber.

2. Device according to claim 1, **characterized in that** the at least its lower side open chamber comprises at each of its two narrow sides between the two doctor blades an inflow opening.

3. Device according to claim 1 or 2, **characterized in that** the chamber comprises at its top side a re-fill opening.

4. Device according to any of claims 1 to 3, **characterized in that** at least a third doctor blade is provided which is preferably disposed between the two doctor blades of the doctor blade arrangement and which projects beyond the two doctor blades in the direction towards the vat bottom.

5. Device according to claim 4, **characterized in that** the third doctor blade touches the vat bottom and is preferably held resiliently biased against the vat bottom.

6. Device according to any of claims 1 to 5, **characterized in that** the doctor blade arrangement is integrally formed in one piece including the two outer doctor blades and consists preferably of a polymer material, for example polytetrafluoroethylene or polyoxymethylene.

7. Device according to any of claims 1 to 6, **characterized in that** a stationary heating device is provided form warming up a layer of photopolymerizable material in the vat to a temperature of at least 30°C.

8. Device according to claim 7, **characterized in that** the heating device includes at least one heating element in or at the vat bottom, as for example a heating foil.

9. Device according to claims 7 or 8, **characterized in that** the heating device is disposed outside of the transparent bottom subregion of the vat.

10. Device according to claims 7, 8 or 9, **characterized in that** the heating device is extending at least partially over the transparent bottom portion of the vat and is arranged to be transparent.

11. Apparatus according to any of claims 7 to 10, **characterized in that** a temperature sensor is provided which cooperates with the control unit for controlling the heating power of the heating device in such a manner that a given temperature of the photopolymerizable material is reached and/or maintained.

12. Device according to any of the claims 1 to 11, **characterized in that** the doctor blade arrangement is heatable, in particular is equipped with at least one heating element, for example an electrical resistance heating element.

## Revendications

1. Dispositif de traitement de matériau photopolymérisable à haute viscosité pour la constitution par couche d'un corps moulé, comprenant
- une cuve avec un fond perméable à la lumière au moins par endroits, dans laquelle un matériau photopolymérisable peut être versé,
- une plateforme de construction qui est maintenue à une hauteur réglable au-dessus du fond de cuve,
- une unité d'exposition qui est commandable pour l'exposition localisée d'une couche de matériau réalisée entre le côté inférieur de la plateforme de construction et le fond de cuve par le dessous au travers du fond de cuve,
- une unité de commande qui est préparée afin de polymériser dans des étapes d'exposition successives des couches superposées sur la plateforme de construction respectivement avec une géométrie prescrite par la commande de l'unité d'exposition et d'adapter après chaque étape d'exposition pour une couche la position relative de la plateforme de construction au fond de cuve afin de constituer ainsi successivement le corps moulé dans la forme souhaitée, et
- une racle guidée de manière mobile avec une unité d'entraînement pour le mouvement alternatif de la racle sous la plateforme de construction,
**caractérisé en ce que**
- la racle présente deux lames de racle espacées dans le sens de mouvement qui sont mobiles à distance constante par rapport au fond de cuve au-dessus de celui-ci,
dans lequel la distance verticale des lames de racle par rapport au fond de cuve est ajustable à l'aide d'une unité d'ajustement,
- la cuve présente des parois avant de cuve de sorte que la lame de racle avant dans le sens de mouvement se déplace respectivement vers l'une des parois avant de cuve,
- **en ce qu'**entre les deux lames de racle, une chambre ouverte vers le bas est réalisée, dont les parois présentent respectivement au moins une ouverture traversant la paroi dans le sens de mouvement de la racle pour la réalisation d'un canal de déversement de sorte que du matériau excédentaire s'accumulant entre la lame de racle avant et la paroi avant de cuve tournée vers celle-ci soit pressé par l'au moins un canal de déversement dans la chambre.

2. Dispositif selon la revendication 1, **caractérisé en ce que** la chambre ouverte vers le bas présente sur les côtés avant entre les deux lames de racle respectivement une ouverture d'afflux.

3. Dispositif selon l'une des revendications 1 ou 2, **caractérisé en ce que** la chambre présente, sur son côté supérieur, une ouverture de remplissage ultérieur.

4. Dispositif selon l'une des revendications 1 à 3, **caractérisé en ce qu'**au moins une troisième lame de racle est prévue, laquelle est de préférence agencée entre les deux lames de racle et dépasse par rapport aux deux lames de racle en direction du fond de cuve.

5. Dispositif selon la revendication 4, **caractérisé en ce que** la troisième lame de racle touche le fond de cuve et est de préférence maintenue de manière pressable élastiquement contre le fond de cuve.

6. Dispositif selon l'une des revendications 1 à 5, **caractérisé en ce que** la racle est réalisée d'un seul tenant avec les deux lames de racle extérieures et se compose de préférence d'un matériau polymère, par exemple du polytétrafluoroéthylène ou polyoxyméthylène.

7. Dispositif selon l'une des revendications 1 à 6, **caractérisé en ce qu'**un dispositif de chauffage stationnaire est prévu pour le chauffage d'une couche du matériau photopolymérisable se trouvant dans la cuve à une température d'au moins 30 °C.

8. Dispositif selon la revendication 7, **caractérisé en ce que** le dispositif de chauffage comporte au moins un élément chauffant agencé sur ou dans le fond de cuve tel qu'une feuille chauffante.

9. Dispositif selon la revendication 7 ou 8, **caractérisé en ce que** le dispositif de chauffage est agencé en dehors de la zone de fond perméable à la lumière de la cuve.

10. Dispositif selon la revendication 7, 8 ou 9, **caractérisé en ce que** le dispositif de chauffage s'étend au moins partiellement sur la zone de fond perméable à la lumière de la cuve et est réalisé de manière perméable à la lumière.

11. Dispositif selon l'une des revendications 7 à 10, **caractérisé en ce qu'**un capteur de température est prévu, lequel coagit avec l'unité de commande pour la régulation de la puissance chauffante du dispositif de chauffage de telle manière qu'une température prescrite du matériau photopolymérisable puisse être atteinte et/ou maintenue.

12. Dispositif selon l'une des revendications 1 à 11, **caractérisé en ce que** la racle peut être chauffée, en particulier est équipée d'au moins un élément chauffant, par exemple un élément chauffant à résistance électrique.
